# EUROPEAN PATENT APPLICATION

(11) **EP 3 474 265 A1**
(43) Date of publication of application: **24.04.2019**
(21) Application number: 17197316.7
(22) Date of filing: 19.10.2017
(51) Int. Cl.: G09G 5/00, H04N 21/436, H04N 21/485, G06F 9/451

(54) **CONTROL DEVICE, DISPLAY DEVICE AND METHOD FOR ASSISTED PLUG CONNECTION**

(71) Applicant: Vestel Elektronik Sanayi ve Ticaret A.S., 45030 Manisa (TR)
(72) Inventor: DERELI, Ulas, 45030 Manisa (TR)
(74) Representative: Ascherl, Andreas

(57) **Abstract**

Provided is a control device for a display device (410) with a housing (411) that comprises a plurality of display connectors, the control device comprising an object detection sensor configured to detect objects (402, 407) that move into proximity of at least one of the display connectors, and a display overlay controller coupled to the object detection sensor and configured to overlay a schematic representation (405, 408) of the display connectors over an image that is displayed on the display device if an object is detected. Further, a respective display device (410) and a respective method are provided.

## Description

### TECHNICAL FIELD

The invention relates to a control device for a display device. Further, the present invention relates to a respective display device and to a method for controlling a display device.

### BACKGROUND

Although applicable to any display device, the present invention will mainly be described in conjunction with TV sets.

Modern TV sets may comprise a plurality of connectors that may be provided on the back or around the frame of the TV set. Such connectors may e.g. comprise power connectors, antenna connectors, HDMI connectors, LAN connectors, USB connectors, composite video connectors, common interface connectors, VGA connectors, audio connectors like e.g. optical and TOSLINK connectors or coaxial connectors.

For a user it may be difficult to find and identify the correct connector for a cable. A user may e.g. move a TV set to access the back of the TV set. However, this may be difficult with increasing size of the TV sets. In addition, moving the TV set do access connectors on the back side of the TV set may not possible for wall-mounted devices at all.

If the user cannot find the correct connector, he may even be required to remove a TV set from the wall and put it back on the wall after installing the respective connector.

Accordingly, there is a need for aiding users in connecting cables to display devices.

### SUMMARY OF THE INVENTION

The present invention provides a control device with the features of claim 1, a display device with the features of claim 8, and a method with the features of claim 9.

Accordingly, it is provided:

A control device for a display device with a housing that comprises a number or plurality, i.e. one or more, of display connectors, the control device comprising an object detection sensor configured to detect objects that move into proximity of at least one of the display connectors, and a display overlay controller coupled to the object detection sensor and configured to overlay a schematic representation of the display connectors over an image that is displayed on the display device if an object is detected.

Further, it is provided:

A display device comprising a housing, a number, i.e. one or more, of display connectors arranged in the housing, and a control device according to the present invention.

In addition, it is provided:

A method for controlling a display device with a housing that comprises a number of display connectors, the method comprising detecting objects that move into proximity of at least one of the display connectors, and overlaying a schematic representation of the display connectors over an image that is displayed on the display device if an object is detected.

The present invention is based on the finding, that often users may not easily access the back of a TV set. Even if users may access the back of the TV set with their hands, they may not be able to identify the single connectors or descriptions provided on the back of the TV set.

The present invention therefore provides an aid for users that helps the users connecting cables to a display device. It is understood, that the term connector in this context may refer to male connectors as well as female connectors. A male connector in the display device will have a corresponding female connector on a cable and vice versa.

The control device comprises the object detection sensor that detects objects that come close to the display connectors. The terms "come close" or "move into proximity" may refer to a predetermined distance, e.g. 1 cm - 10 cm, e.g. 3 cm, 5 cm or 7 cm. Alternatively, these terms may refer to any object that is detected by its movement within the range of coverage of the object detection sensor. If for example a TV set is placed on a shelf, usually no movement will be present between the TV set's frame and the top surface of the shelf, or between the housing of the TV set and a wall behind the TV set. Therefore, any movement that is detected by the object detection sensor may trigger the detection of an object by the object detection sensor. The range of coverage of the object detection sensor may e.g. be limited by the type of sensor or artificially. A detected object may be any type of object, like e.g. a connector, a cable or the hand of a user.

The object detection sensor provides the information about the detected objects to the display overlay controller. The display overlay controller will then generate an overlay image that is overlaid over an image that is displayed on the screen of the display device, e.g. a movie or a TV show. The overlay image comprises a schematic representation of the display connectors that show the user which connectors are present in the display device and may also indicate at which position in the housing of the display device these connectors are provided. The term "schematic representation" refers to any type of graphical drawing that allows determining the type of connector. Such a schematic representation may therefore be a line drawing, a colored drawing or an image of the display connectors.

It is understood, that the display overlay controller may be a dedicated control device in the display device. As alternative, the display overlay controller may also be integrated into a central control unit or an image or graphics controller of the display device. Such a control unit or controller may e.g. comprise functions for generating images on the screen of the display device based on a respective source signal, like e.g. a received RF signal, an HDMI signal or a video/image file on a USB stick. The function of the display overlay controller may be provided in such a control unit or controller as a firmware or software function that is executed together with the other functions of the control unit or controller.

With the arrangement of the present invention it is possible to guide a user that wants to plug in a cable into a display device, like e.g. a TV set. The present invention is especially useful with large screens that may not easily be moved by the user and with wall-mounted display devices.

Further embodiments of the present invention are subject of the further subclaims and of the following description, referring to the drawings.

In an embodiment, the display overlay controller may be configured to display the schematic representation of the display connectors in the display device at locations that correspond to the locations of the display connectors in the housing.

The display connectors may e.g. be provided on the back of the housing of the display device or on the outer edges of a frame of the display device. To further aid the user in plugging cables into the connectors, the display overlay controller may show the schematic representation of the connectors on the screen at positions that correspond to the positions of the real display connectors in the housing of the display.

If for example a connector is provided on the left outer edge of the housing of the display device, the respective schematic representation may be provided on the left side of the screen of the display device. If a connector is provided on the back of the display device, the respective schematic representation may be shown at the respective position in the center of the screen of the display device.

In another embodiment, the object detection sensor may be configured to detect the positions of the objects, and the display overlay controller may be configured to display in addition to the schematic representation of the display connectors an additional representation of the detected objects in the display device at locations that correspond to the detected position of the detected objects.

The object detection sensor not only determines if an object moves into vicinity of the display connectors. Instead, the object detection sensor also determines the position of any object that moves into the vicinity of the display connectors. The information about the positions of moving objects is then provided to the display overlay controller.

With this information, the display overlay controller may then provide the schematic representation with an additional representation or indication of the position of the moving object. The moving object will usually either be the end of the cable or the hand of the user. Therefore, with this indication, e.g. an arrow head or a schematic drawing of a hand, the user may bring the cable into the correct position without seeing neither the display connector nor his hand, e.g. on the back of the housing of the display device.

In an embodiment, the object detection sensor may comprise a number, i.e. one or more, of capacitive sensors and/or ultrasonic sensors and/or optical sensors.

It is understood, that any type of sensor may be used as object detection sensor that is capable of detecting the movement of objects. With capacitive sensors, the detection of objects may be limited to the hand or fingers of a user. This may reduce or avoid false object detections by other moving objects. Ultrasonic sensors may e.g. be ultrasonic-based distance sensors that trigger or report the detection of an object whenever the measured distance is reduced from one measurement to the next measurement by more than a predetermined threshold value. The same applies to optical sensors that may e.g. be optical distance sensors or light barrier sensors.

In a further embodiment, the control device may comprise an imaging sensor coupled to the object detection sensor and configured to record at least one image if an object is detected by the object detection sensor. Further, the control device may comprise an image recognition unit configured to analyze the image recorded by the imaging sensor for the presence of an external connector and determine the type of any detected external connector.

The imaging sensor may e.g. be a camera that is provided in the display device. Such a camera may e.g. be a dedicated camera or may be provided in a TV set for performing video conferencing. The imaging sensor may in this embodiment be triggered by the object detection sensor as soon as an object is detected.

This means that a user may e.g. hold a cable in front of the camera and then move the other hand to the connectors. This will trigger the camera taking an image of the connector. The recorded image is then analyzed by the image recognition unit for the presence of a connector. The image recognition unit will further analyze the type of the respective connector. The image recognition unit may e.g. comprise image recognition algorithms that identify connectors and their type. Further, character recognition functions are possible that identify identifications on the connectors.

In an embodiment, the display overlay controller may be coupled to the image recognition unit and may be configured to mark in the schematic representation of the display connectors those display connectors that match the detected external connectors, or to only show in the schematic representation of the display connectors those display connectors that match the detected external connectors.

If the type of external connector that a user wants to connect to a display connector is known, this information may be used to adapt the schematic representation of the display connectors. For example the corresponding connectors may be marked accordingly. As an alternative, only the corresponding connectors may be shown or the not-matching connectors may be greyed out.

In another embodiment, the display overlay controller may be configured to determine which of the display connectors are in use and mark the respective display connectors in the schematic representation as blocked.

The display overlay controller may comprise a connection sensor or detector that is capable of determining, which of the display connectors is already connected to a cable. The display overlay controller may then modify the schematic representation accordingly, and mark the display connectors that are in use. The user may then quickly see which connectors are available and which are used.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a control device according to the present invention;
- Fig. 2: shows a block diagram of an embodiment of a display device according to the present invention;
- Fig. 3: shows a block diagram of another embodiment of a display device according to the present invention;
- Fig. 4: shows a block diagram of another embodiment of a display device according to the present invention;
- Fig. 5: shows a flow diagram of an embodiment of a method according to the present invention; and
- Fig. 6: shows a flow diagram of another embodiment of a method according to the present invention.

In the figures like reference signs denote like elements unless stated otherwise.

### DETAILED DESCRIPTION OF THE DRAWINGS

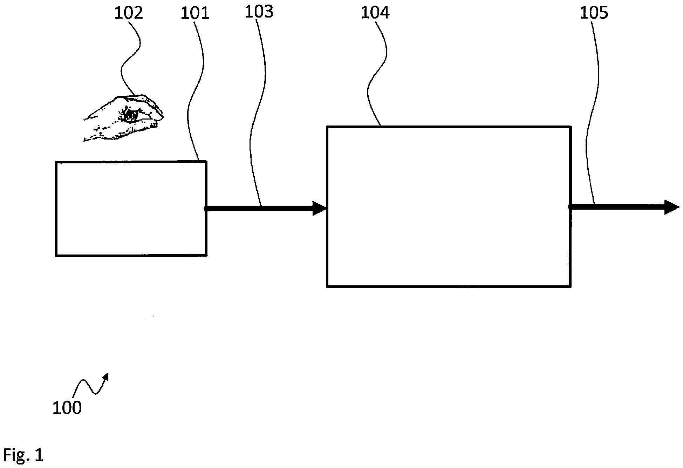

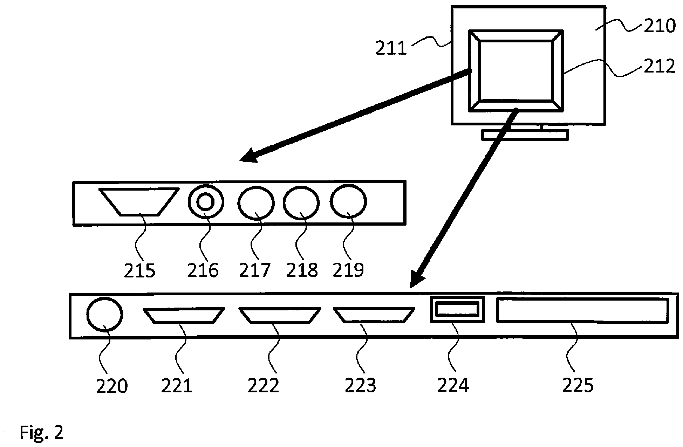

Fig. 1 shows a block diagram of a control device 100 for a display device with a housing that comprises a number of display connectors, see Fig. 2. The control device 100 comprises an object detection sensor 101 that is coupled to a display overlay controller 104.

The object detection sensor 101 detects objects 102 that move into proximity of at least one of the display connectors and provides a respective detection signal 103 to the display overlay controller 104. The display overlay controller 104 overlays a schematic representation 105 of the display connectors over an image that is displayed on the display device if an object is detected.

The display overlay controller 104 may e.g. display the schematic representation 105 of the display connectors in the display device at locations on a screen of the display device that correspond to the locations of the display connectors in the housing of the display device.

This leads to the display device showing the representation of the display connectors such that a user may immediately see which display connectors are provided at which section of the housing of the display device.

The object detection sensor 101 may e.g. comprise a number, i.e. one or more, of capacitive sensors and/or ultrasonic sensors and/or optical sensors for detecting the objects. In addition to detecting the presence of the objects, the object detection sensor 101 may also detect the positions of the objects 102. In this case, the display overlay controller 104 may display in addition to the schematic representation 105 of the display connectors an additional representation of the detected objects 102 in the display device at locations that correspond to the detected positions of the detected objects 102.

Although not explicitly shown, the control device 100 may comprise an imaging sensor that is coupled to the object detection sensor 101 and records at least one image, i.e. a single image or a stream of images like a video, if an object 102 is detected by the object detection sensor 101. After recording the image or stream an image recognition unit may analyze the image recorded by the imaging sensor for the presence of an external connector and determine the type of any detected external connector.

The display overlay controller 104 may be coupled to the image recognition unit. In this case, the display overlay controller 104 may mark in the schematic representation 105 of the display connectors those display connectors that match the detected external connectors. As alternative, the display overlay controller 104 may only show in the schematic representation 105 of the display connectors those display connectors that match the detected external connectors.

In addition, the display overlay controller 104 may also determine which of the display connectors are in use. If some of the display connectors are already in use, the display overlay controller 104 may mark the respective display connectors in the schematic representation 105 as blocked.

Fig. 2 shows a block diagram of a display device 210 viewed from the back. The display device 210 comprises a housing 211 with a protrusion 212 on the back of the housing 211. In the left and bottom edges of the protrusion 212 the display connectors 215 - 225 are provided.

The left edge of the protrusion accommodates VGA connector 215, headphones connector 216, and three composite connectors 217, 218, 219. The bottom edge of the protrusion accommodates an antenna connector 220, three HDMI connectors 221, 222, 223, a USB connector 224 and a common interface connector 225.

It is understood, that the shown arrangement is mere exemplary and that other display devices may comprise other connectors at different positions.

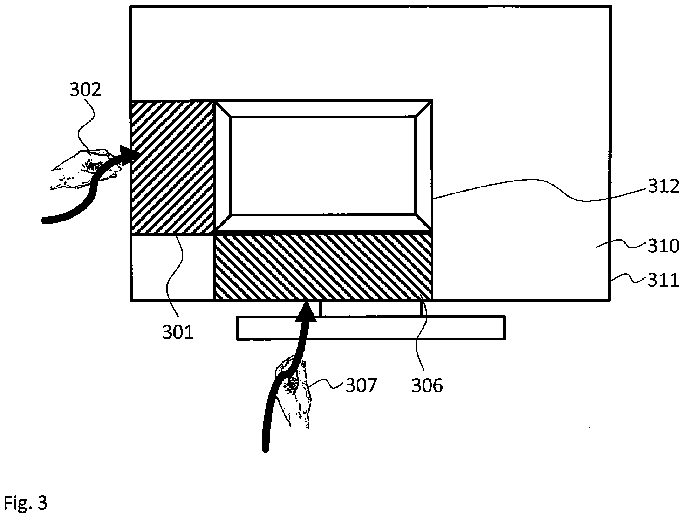

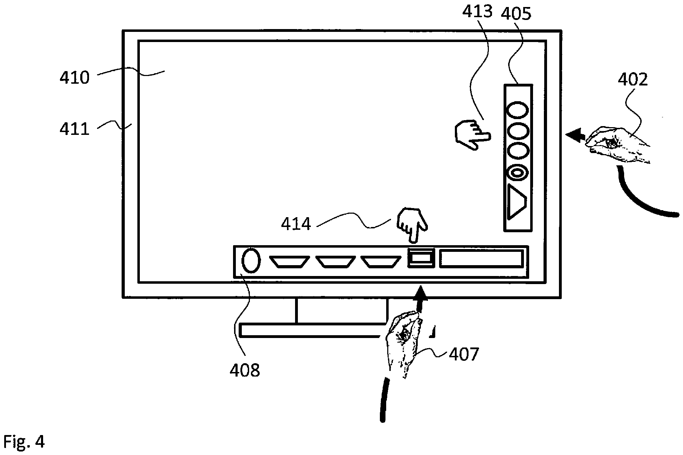

Although not shown, it is understood, that the display device 210 comprises a control device as for example explained with regard to Fig. 1. The same applies to the display devices 310, 410 of Figs. 3 and 4.

Fig. 3 shows a block diagram of another display device 310 with a housing 311 that comprises a protrusion 312 viewed from the back. The display device 310 comprises a first object detection sensor 301 and a second object detection sensor 306. The first object detection sensor 301 is arranged next to the left edge of the protrusion 312. The second object detection sensor 306 is arranged below the bottom edge of the protrusion 312.

In Fig. 3 two objects 302, 307 are shown. Object 302 approaches the protrusion 312 from the left and enters the range of coverage of the object detection sensor 301. Object 307 approaches the protrusion 312 from the bottom and enters the range of coverage of the object detection sensor 306.

Although the objects 302, 307 are shown as hands, it is understood, that the objects 302, 307 may also be the ends of cables, i.e. the respective connectors.

As soon as one of the object detection sensors 301, 306 detects the respective object 302, 307 it provides a detection signal to the display overlay controller that generates a respective overlay image with the schematic representation of the connectors. A user in front of the display device 310 will therefore immediately see the positions of the connectors and the position of his hand or the end of the respective cable.

Fig. 4 shows a block diagram of a display device 410 in a front view. The display device 410 comprises a housing 411. As in Fig. 3, two objects 402, 407 approach the display device 410 from the right and from the bottom. Although not shown, the display device 410 comprises a control device with an object detection sensors and a display overlay controller.

The display overlay controller shows on the display of the display device 410 on the right, a schematic representation 405 of the display connectors that are provided on the back of the display device 410 on the right side. On the bottom, the display overlay controller shows a schematic representation 408 of the display connectors that are provided on the back of the display device 410 on the bottom side.

It can further be see that the display overlay controller also shows schematic representations 413, 414 of the objects 402, 407 in the form of hands with an extended index finger. The schematic representations 413, 414 are shown at the position that corresponds the position of the objects 402, 407. Further, the display overlay controller will move the schematic representations 413, 414 according to any movement of the objects 402, 407.

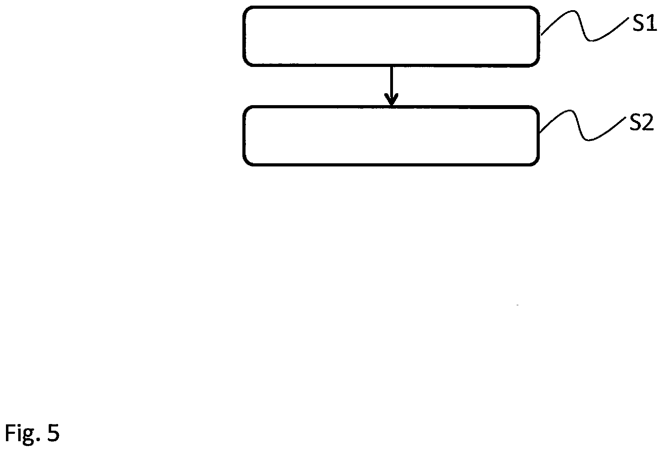

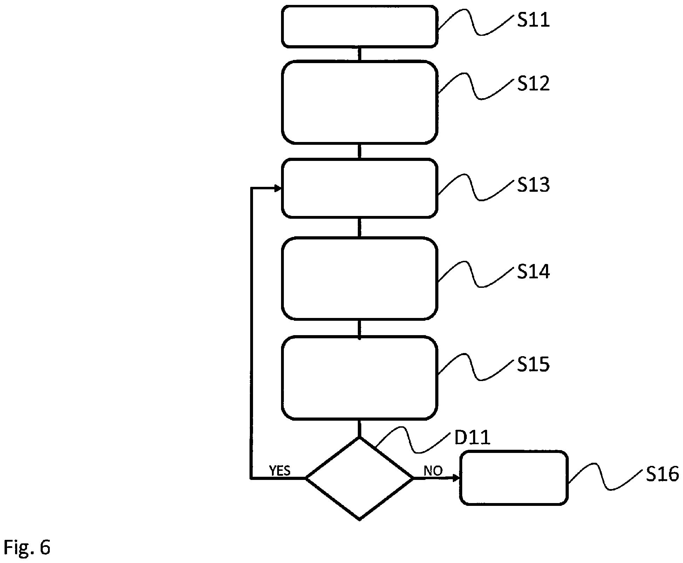

For sake of clarity in the following description of the method based Figs. 5 and 6 the reference signs used above in the description of apparatus based Figs. 1 - 4 will be maintained.

Fig. 5 shows a flow diagram of a method for controlling a display device 210, 310, 410 with a housing 211, 311, 411 that comprises a number of display connectors 215, 216, 217, 218, 219, 220, 221, 222, 223, 224, 225.

The method comprises detecting S1 objects 102, 302, 307, 402, 407 that move into proximity of at least one of the display connectors 215, 216, 217, 218, 219, 220, 221, 222, 223, 224, 225, and overlaying S2 a schematic representation 105, 405, 408 of the display connectors 215, 216, 217, 218, 219, 220, 221, 222, 223, 224, 225 over an image that is displayed on the display device 210, 310, 410 if an object 102, 302, 307, 402, 407 is detected.

Detecting S1 may comprise detecting positions of the objects 102, 302, 307, 402, 407, and overlaying may comprise displaying in addition to the schematic representation 105, 405, 408 of the display connectors 215, 216, 217, 218, 219, 220, 221, 222, 223, 224, 225 an additional representation 413, 414 of the detected objects 102, 302, 307, 402, 407 in the display device 210, 310, 410 at locations that correspond to the detected position of the detected objects 102, 302, 307, 402, 407. Detecting S1 may for example be performed with a number of capacitive sensors and/or ultrasonic sensors and/or optical sensors.

Overlaying S2 may comprise displaying the schematic representation 105, 405, 408 of the display connectors 215, 216, 217, 218, 219, 220, 221, 222, 223, 224, 225 in the display device 210, 310, 410 at locations that correspond to the locations of the display connectors 215, 216, 217, 218, 219, 220, 221, 222, 223, 224, 225 in the housing 211, 311, 411.

Overlaying S2 may comprise determining which of the display connectors 215, 216, 217, 218, 219, 220, 221, 222, 223, 224, 225 are in use and marking the respective display connectors 215, 216, 217, 218, 219, 220, 221, 222, 223, 224, 225 in the schematic representation 105, 405, 408 as blocked.

The method may further comprise recording at least one image if an object 102, 302, 307, 402, 407 is detected, and analyzing the recorded image for the presence of an external connector and determining the type of any detected external connector. Overlaying S2 may in this case comprise marking in the schematic representation 105, 405, 408 of the display connectors 215, 216, 217, 218, 219, 220, 221, 222, 223, 224, 225 those display connectors 215, 216, 217, 218, 219, 220, 221, 222, 223, 224, 225 that match the detected external connectors, or only showing in the schematic representation 105, 405, 408 of the display connectors 215, 216, 217, 218, 219, 220, 221, 222, 223, 224, 225 those display connectors 215, 216, 217, 218, 219, 220, 221, 222, 223, 224, 225 that match the detected external connectors.

Fig. 6 shows a flow diagram of another method according to the present invention.

The method starts with step S11 with activating the object detection sensor 101, 301, 306. This may automatically happen with the startup of the display device 210, 310, 410. In step S12 an object 102, 302, 307, 402, 407 is detected, e.g. a user's hand that tries to plug in a cable into one of the display connectors 215, 216, 217, 218, 219, 220, 221, 222, 223, 224, 225. In step S13 the object detection sensors 101, 301, 306 provide a respective signal to the display overlay controller 104. The display overlay controller 104 then displays a schematic representation 105, 405, 408 of the display connectors 215, 216, 217, 218, 219, 220, 221, 222, 223, 224, 225 over an image that is displayed on the display device 210, 310, 410 together with a schematic representation 413, 414 of the object 102, 302, 307, 402, 407. In Step S15 the display overlay controller 104 moves the schematic representation 413, 414 of the object 102, 302, 307, 402, 407 according to the movement of the real object 102, 302, 307, 402, 407.

In decision D11 the method verifies if the object 102, 302, 307, 402, 407 is still present. If the object 102, 302, 307, 402, 407 is not present, the method ends in step S16 with removing the schematic representation 105, 405, 408 of the display connectors 215, 216, 217, 218, 219, 220, 221, 222, 223, 224, 225 and the schematic representation 413, 414 of the object 102, 302, 307, 402, 407. If the object 102, 302, 307, 402, 407 is still present, the method returns to step S13.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a control device 100 for a display device 210, 310, 410 with a housing 211, 311, 411 that comprises a number or plurality of display connectors 215, 216, 217, 218, 219, 220, 221, 222, 223, 224, 225, the control device 100 comprising an object detection sensor 101, 301, 306 configured to detect objects 102, 302, 307, 402, 407 that move into proximity of at least one of the display connectors 215, 216, 217, 218, 219, 220, 221, 222, 223, 224, 225, and a display overlay controller 104 coupled to the object detection sensor 101, 301, 306 and configured to overlay a schematic representation 105, 405, 408 of the display connectors 215, 216, 217, 218, 219, 220, 221, 222, 223, 224, 225 over an image that is displayed on the display device 210, 310, 410 if an object 102, 302, 307, 402, 407 is detected. Further, the present invention provides a respective display device 210, 310, 410 and a respective method.

### List of reference signs

- 100: control device
- 101, 301, 306: object detection sensor
- 102, 302, 307, 402, 407: object
- 103: detection signal
- 104: display overlay controller
- 105, 405, 408: schematic representation of display connectors
- 413, 414: schematic representation of display object

- 210, 310, 410: display device
- 211, 311, 411: housing
- 212, 312: protrusion

- 215, 216, 217, 218, 219, 220: display connectors
- 221, 222, 223, 224, 225: display connectors

- S1, S2, S11 - S16: method steps
- D11: decision

## Claims

1. Control device (100) for a display device (210, 310, 410) with a housing (211, 311, 411) that comprises a number of display connectors (215, 216, 217, 218, 219, 220, 221, 222, 223, 224, 225), the control device (100) comprising:
an object detection sensor (101, 301, 306) configured to detect objects (102, 302, 307, 402, 407) that move into proximity of at least one of the display connectors (215, 216, 217, 218, 219, 220, 221, 222, 223, 224, 225), and
a display overlay controller (104) coupled to the object detection sensor (101, 301, 306) and configured to overlay a schematic representation (105, 405, 408) of the display connectors (215, 216, 217, 218, 219, 220, 221, 222, 223, 224, 225) over an image that is displayed on the display device (210, 310, 410) if an object (102, 302, 307, 402, 407) is detected.

2. Control device (100) according to claim 1, wherein the display overlay controller (104) is configured to display the schematic representation (105, 405, 408) of the display connectors (215, 216, 217, 218, 219, 220, 221, 222, 223, 224, 225) in the display device (210, 310, 410) at locations that correspond to the locations of the display connectors (215, 216, 217, 218, 219, 220, 221, 222, 223, 224, 225) in the housing (211, 311, 411).

3. Control device (100) according to any one of the preceding claims, wherein the object detection sensor (101, 301, 306) is configured to detect the positions of the objects (102, 302, 307, 402, 407), and wherein the display overlay controller (104) is configured to display in addition to the schematic representation (105, 405, 408) of the display connectors (215, 216, 217, 218, 219, 220, 221, 222, 223, 224, 225) an additional representation (413, 414) of the detected objects (102, 302, 307, 402, 407) in the display device (210, 310, 410) at locations that correspond to the detected position of the detected objects (102, 302, 307, 402, 407).

4. Control device (100) according to any one of the preceding claims, wherein the object detection sensor (101, 301, 306) comprises a number of capacitive sensors and/or ultrasonic sensors and/or optical sensors.

5. Control device (100) according to any one of the preceding claims, comprising an imaging sensor coupled to the object detection sensor (101, 301, 306) and configured to record at least one image if an object (102, 302, 307, 402, 407) is detected by the object detection sensor (101, 301, 306), and
comprising an image recognition unit configured to analyze the image recorded by the imaging sensor for the presence of an external connector and determine the type of any detected external connector.

6. Control device (100) according to claim 5, wherein the display overlay controller (104) is coupled to the image recognition unit and is configured to mark in the schematic representation (105, 405, 408) of the display connectors (215, 216, 217, 218, 219, 220, 221, 222, 223, 224, 225) those display connectors (215, 216, 217, 218, 219, 220, 221, 222, 223, 224, 225) that match the detected external connectors, or to only show in the schematic representation (105, 405, 408) of the display connectors (215, 216, 217, 218, 219, 220, 221, 222, 223, 224, 225) those display connectors (215, 216, 217, 218, 219, 220, 221, 222, 223, 224, 225) that match the detected external connectors.

7. Control device (100) according to any one of the preceding claims, wherein the display overlay controller (104) is configured to determine which of the display connectors (215, 216, 217, 218, 219, 220, 221, 222, 223, 224, 225) are in use and mark the respective display connectors (215, 216, 217, 218, 219, 220, 221, 222, 223, 224, 225) in the schematic representation (105, 405, 408) as blocked.

8. Display device (210, 310, 410) comprising:
a housing (211, 311, 411),
a number of display connectors (215, 216, 217, 218, 219, 220, 221, 222, 223, 224, 225) arranged in the housing (211, 311, 411), and
a control device (100) according to any one of the preceding claims.

9. Method for controlling a display device (210, 310, 410) with a housing (211, 311, 411) that comprises a number of display connectors (215, 216, 217, 218, 219, 220, 221, 222, 223, 224, 225), the method comprising:
detecting (S1) objects (102, 302, 307, 402, 407) that move into proximity of at least one of the display connectors (215, 216, 217, 218, 219, 220, 221, 222, 223, 224, 225), and
overlaying (S2) a schematic representation (105, 405, 408) of the display connectors (215, 216, 217, 218, 219, 220, 221, 222, 223, 224, 225) over an image that is displayed on the display device (210, 310, 410) if an object (102, 302, 307, 402, 407) is detected.

10. Method according to claim 9, wherein overlaying (S2) comprises displaying the schematic representation (105, 405, 408) of the display connectors (215, 216, 217, 218, 219, 220, 221, 222, 223, 224, 225) in the display device (210, 310, 410) at locations that correspond to the locations of the display connectors (215, 216, 217, 218, 219, 220, 221, 222, 223, 224, 225) in the housing (211, 311, 411).

11. Method according to any one of the preceding claims 9 and 10, wherein detecting (S1) comprises detecting positions of the objects (102, 302, 307, 402, 407), and wherein overlaying comprises displaying in addition to the schematic representation (105, 405, 408) of the display connectors (215, 216, 217, 218, 219, 220, 221, 222, 223, 224, 225) an additional representation (413, 414) of the detected objects (102, 302, 307, 402, 407) in the display device (210, 310, 410) at locations that correspond to the detected position of the detected objects (102, 302, 307, 402, 407).

12. Method according to any one of the preceding claims 9 to 11, wherein detecting (S2) is performed with a number of capacitive sensors and/or ultrasonic sensors and/or optical sensors.

13. Method according to any one of the preceding claims 9 to 12, comprising recording at least one image if an object (102, 302, 307, 402, 407) is detected, and analyzing the recorded image for the presence of an external connector and determining the type of any detected external connector.

14. Method according to claim 13, wherein overlaying (S2) comprises marking in the schematic representation (105, 405, 408) of the display connectors (215, 216, 217, 218, 219, 220, 221, 222, 223, 224, 225) those display connectors (215, 216, 217, 218, 219, 220, 221, 222, 223, 224, 225) that match the detected external connectors, or only showing in the schematic representation (105, 405, 408) of the display connectors (215, 216, 217, 218, 219, 220, 221, 222, 223, 224, 225) those display connectors (215, 216, 217, 218, 219, 220, 221, 222, 223, 224, 225) that match the detected external connectors.

15. Method according to any one of the preceding claims 9 to 14, wherein overlaying (S2) comprises determining which of the display connectors (215, 216, 217, 218, 219, 220, 221, 222, 223, 224, 225) are in use and marking the respective display connectors (215, 216, 217, 218, 219, 220, 221, 222, 223, 224, 225) in the schematic representation (105, 405, 408) as blocked.
